# EUROPEAN PATENT SPECIFICATION

(11) **EP 2 131 084 B1**
(45) Date of publication and mention of the grant of the patent: **23.03.2016**
(21) Application number: 09162105.2
(22) Date of filing: 05.06.2009
(51) Int. Cl.: F16L 3/22, F16L 3/127, F16B 21/07

(54) **Fastening element for fastening a structural part to a pin**
Befestigungselement zum Befestigen ein Strukturelement an einem Bolzen
Element de fixation pour fixer une piece de structure à un goujon

(30) Priority: 06.06.2008 DE 202008007632 U
(43) Date of publication of application: 09.12.2009
(73) Proprietor: Newfrey LLC, Newark, Delaware 19711 (US)
(72) Inventor: Jung, Markus, 35394 Gießen (DE); Hahn, Ernst-Ludwig, 35394 Gießen (DE); Reindl, Johann A., 35394 Gießen (DE); Stau, Bastian, 35394 Gießen (DE)
(74) Representative: Haar, Lucas Heinz Jörn

(56) References cited:
- US-A- 4 467 988
- US-A- 5 941 483
- US-A1- 2002 104 196

## Description

The invention relates to a fastening element for fastening a structural part to a pin, having a body that has a hole extending along a central axis for accommodation of the pin, where at least one catch and at least one guide, which are designed to engage with the pin, are located in the hole.

Fastening elements of the kind indicated are known in a variety of embodiments, for example from US 6,240,602 B1, US 7,316,374 B2 or EP 1,450,090 A1, and are used to fasten structural parts such as cables, tubes or the like to a pin by simple mounting operations and without the use of special mounting tools.

In a fastening element of the kind indicated, disclosed in US 6,240,602 B1, the body has a cylindrical bore, which is of sufficient size to be able to easily introduce a cylindrical pin provided with an external thread. In the cylindrical wall of the bore are formed two longitudinal grooves opposite each other, where in one or both of the grooves is located a catch projecting into the bore, which is fastened by a flexible crosspiece to the base of the groove. If a threaded pin is introduced into the bore, the catch is bent over, whereupon it engages with the thread of the pin and thus holds the pin in the bore against the direction of insertion. In addition, the threaded pin is supported in the radial direction on the inner wall of the bore. The known fastening is prevented by the cylindrical bore, the inside diameter of which only slightly exceeds the outside diameter of the threaded pin, from tipping movements with reference to the pin. However, here it is disadvantageous that the diameters of the pin and the bore must be matched to each other very exactly, so that size variations and dirt can[not] interfere with the mounting operation. And fastening to a pin of unlike diameter is not possible.

The aforementioned US 7,316,374 B2 discloses a fastening element for pipes, in which two pairs of catches are located spaced apart and at right angles to each other in the hole for accommodation of the pin. Between the pairs of catches and at the end of the hole opposite the insert opening, the wall of the hole forms pairwise guide surfaces which center the pin in the hole and produce a secure and firm support. Here, too, the pin diameter and the spacing of the guide surfaces must match exactly.

EP 1,450,090 A1 describes a fastening element with a pin accommodation and dish-shaped clamping sections for holding pipes. The clamping sections contain a lining consisting of non-rigid synthetic material with ribs projecting inward for isolation from vibrations.

US 2002/0104196 A1 discloses a dual spacing clamp tie which includes a Locking head and two flexible straps extending from the locking head. An aperture is provided through the locking head for securing the dual spacing clamp tie to a mounting structure such as a threaded stud. A pawl mechanism is provided within the aperture to secure the clamp tie to the mounting stud.

A mounting clip disclosed in US 4 467 988 A has a mounting section for attaching the clip to a support and one or more retaining sections. The mounting section consists of a through opening and has a locking washer made of metal which is injected into the plastic material of the mounting section. The opening has a cylindrical entry section and above the washer a cylindrical section of smaller diameter in which longitudinal ribs are distributed over the circumference. The longitudinal ribs receive a threaded stud or pin of a mounting structure so that clamping of the clip is achieved, through co-operation of the stud or pin with the locking washer.

The object of the invention is to procure a fastening element of the kind mentioned at the beginning, which is suitable for at least two unlike pin diameters, which differ from each other by a nominal diameter size. The fastening element should in addition be capable of being held on a pin secure against tipping and the hole for accommodation of the pin should be designed so that dirt and variations in size cannot interfere with the mounting operation. In addition, the fastening element should be simple and inexpensive to produce of synthetic material in the injection molding process.

According to the invention, the said object is accomplished by a fastening element having the features indicated in Claim 1. Advantageous refinements are indicated in the dependent claims.

The fastening element according to the invention has a body that has a hole extending along a central axis for accommodation of the pin and has an insert opening, where at least one catch and at least one guide are located in the hole and are designed to engage with the pin, where the at least one guide has an elastically yielding guide element which consists of a rubber-elastic synthetic material and is deformable in the radial direction with reference to the axis, and in that a supporting element of rubber-elastic synthetic material is located on the side of the body on which the insert opening of the hole lies and the guide element is molded in one piece together with the supporting element.

In the fastening element designed according to the invention, a pin inserted in the hole is held by a catch and in addition is supported in the hole at a place distant from the catch on an elastically yielding guide element. Owing to the yielding nature of the support, the fastening element can be held secure against tipping on a thinner as well as on a thicker pin.

In a preferred embodiment the guide element consists of a rubber-elastic synthetic material, so that it can readily adapt to unlike pin diameters. The rubber-elastic synthetic material, for example TPE, has a vibration-damping effect, so that vibrations acting on the fastening element are not transmitted through the pin to the supporting part. According to the invention, the guide element may have the shape of a rib that extends in the axial direction of the hole. The cross section of the rib may decrease in the direction of the central axis of the hole, so that its rigidity increases with increasing radial deformation of the rib. In addition, it is advantageous when the guide element and the catch are located opposite each other in the hole, so that the holding force of the catch and the supporting force of the guide element are able to counteract each other.

In order to facilitate introduction of the pin into the hole, according to the invention, it may additionally be provided that the hole has a cylindrical holding section and a lead-in section widened conically toward the insert opening, the guide element and the catch being located in the holding section.

A further advantage of the fastening element consists in that the fastening element is capable of being supported on a carrier by the supporting element of rubber-elastic synthetic material, which is located on the side of the body on which the insert opening of the hole lies. For the simplification of production, it is advantageous in this connection when the guide element and the supporting element are molded together in one piece. The supporting element may then be located in a groove of the body and have projections projecting from the groove.

Although in some applications it may suffice when only one catch and one guide element are found in the hole, to increase the holding force it may be advantageous to provide a plurality of guide elements and a plurality of catches in the hole, for example distributed in the peripheral direction.

According to another proposal of the invention, the body of the fastening element may have a U-shaped holding region, for example a clamp, which serves for holding an object. On its inner side the holding region may be coated with a lining of rubber-elastic synthetic material, the guide element preferably being molded in one piece together with the lining. At the same time, it is advantageous when the guide element is located in a recess in the wall of the hole.

In addition, an embodiment of the fastening element in which the catch is located in the vicinity of the insert opening of the hole, where the guide element, viewed from the insert opening, is located behind the catch and at a distance from the latter, is advantageous. In such an arrangement of catch and guide element, the guide element may form an annular section of the hole.

An additional embodiment of the invention provides that the guide element has a wall section extending in the peripheral direction, which is located at a distance from the inner wall of the hole and is connected with the inner wall by at least one radial crosspiece and which has a region yielding elastically in the radial direction. Such a design has the advantage that the guide element may consist of the same hard synthetic material as the body and may be produced integral with the body. Here, the wall section preferably extends over a sector of the hole that is smaller than 180°, where the crosspiece is located in the center between the peripheral ends of the wall section and the peripheral ends have a distance from the central axis of the hole that is smaller than the greatest distance of the wall section from the central axis of the hole.

Here, the peripheral ends of the wall section act as radially elastic arms, which rest on a pin of small diameter and can be bent radially outward by a pin of greater diameter. A design alternative to this may consist in that the peripheral ends of the wall section are connected by crosspieces with the inner wall of the hole and the wall section between the peripheral ends has a distance from the central axis of the hole that is equal to or smaller than the distance of the peripheral ends from the central axis of the hole.

According to the invention, the body of the fastening element preferably has an object holder, which is designed for the fastening of a structural element. The object holder may be designed as an elastic clamp, but may alternatively have a holding band and a fastener for fastening the free end of the holding band.

The invention is described in detail below by an exemplary embodiment represented in the drawing, wherein:
- Figure 1: shows a view of the underside of a first fastening element according to the invention,
- Figure 2,: a view of the upper side of the fastening element of Figure 1,
- Figure 3,: a longitudinal section of the fastening element of Figure 1 with a thin pin,
- Figure 4,: a longitudinal section of the fastening element of Figure 1 with a thick pin,
- Figure 5,: a side view of a second fastening element according to the invention,
- Figure 6,: a view of the upper side of the fastening element of Figure 5,
- Figure 7,: a cross section of the fastening element of Figure 5 with a thin pin,
- Figure 8,: a cross section of the fastening element of Figure 5 with a thick pin,
- Figure 9,: a perspective view of a third fastening element according to the invention,
- Figure 10,: a side view of the fastening element of Figure 9,
- Figure 11,: a cross section of the fastening element of Figure 9 with a thin pin,
- Figure 12,: a cross section of the fastening element of Figure 9 with a thick pin,
- Figure 13,: a perspective view of a fourth fastening element according to the invention,
- Figure 14,: a side view of the fastening element of Figure 13,
- Figure 15,: a cross section of the fastening element of Figure 13 with a thin pin,
- Figure 16,: a cross section of the fastening element of Figure 13 with a thick pin.

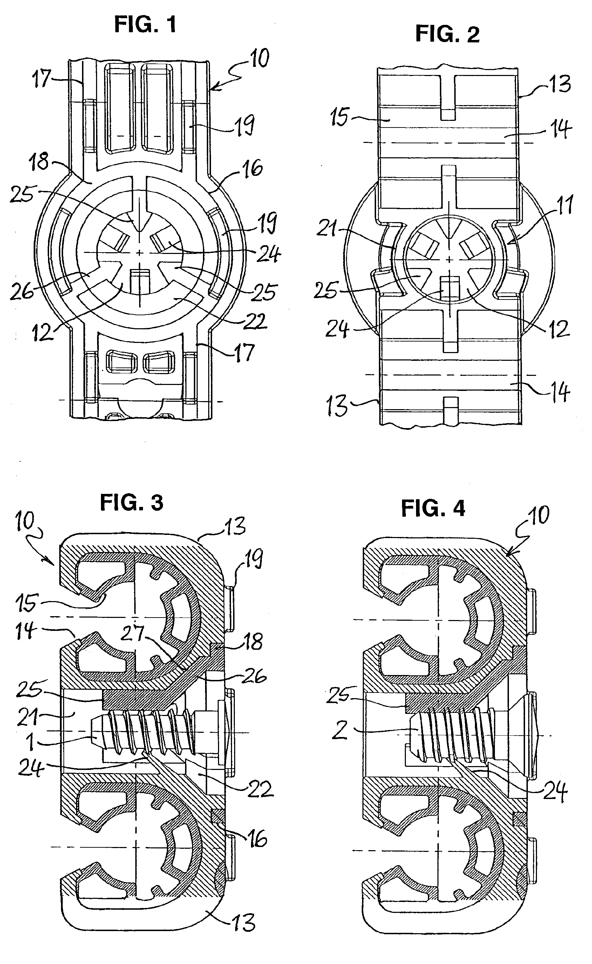

The fastening element 10 shown in Figures 1 to 4 has a body that forms a central fastening section 11 with a hole 12 and two U-shaped holding regions 13 located in symmetrical arrangement on both sides of the fastening section 11 for holding elongated objects such as pipes, cables or the like. The holding regions 13 in each instance have on the upper side of the fastening element 10 a lead-in slot 14, which narrows conically from outside inward and through which an object can be pressed into the respective holding region 13. On the inner side, the holding regions 13 are coated with a lining 15 of rubber-elastic synthetic material, which serves to dampen the transmission of vibration from the object held to the fastening element 10.

On the underside shown in Figure 1, the fastening element 10 has an annular groove 16 surrounding the insert opening of the hole 12 at a distance and longitudinal grooves 17 branching off from the latter, in which is located a supporting element 18 of rubber-elastic synthetic material. The supporting element 18 is provided with projections 19, which project from the annular groove 16 and the longitudinal grooves 17 and produce a soft elastic support of the fastening element 10 on a supporting surface.

The hole 12 penetrates the fastening element 10 from the underside to the upper side and has adjoining the upper side a cylindrical holding section 21, which extends over about two-thirds the length of the hole 12. The holding section 21 is adjoined by a conical lead-in section 22, which widens toward the underside and ends with a narrow cylindrical surface of larger diameter. In the holding section 21, in the vicinity of the lead-in section 22, are located three catches 24 at uniform distances apart. The catches 24 project inward at an angle of about 45° to the central axis of the hole 12 and in the direction of the upper side. In the interspaces between the catches 24 are found guide elements 25, which are designed as prism-like ribs and run in the longitudinal direction on the wall of the holding section 21. The guide elements 25 have a substantially triangular cross section. They rest with a back surface on the wall of the holding section 21 and their radially inner edge is truncated. The guide elements 25 are connected by crosspieces 26 with the supporting element 18. The crosspieces 26 are located in grooves 27, which are recessed in the wall of the lead-in section 22 and open into the annular groove 16. Owing to anchoring of the crosspieces 26 in the grooves 27, the guide elements 25 are held firmly in their position in the holding section 21. In addition, the adhesion between the guide elements 25 and the wall of the holding section 21 contributes to fixation of the guide elements 25 in the holding section 21.

The design described allows the guide elements 25 to be produced together with the supporting element 18 in one work step by the so-called two-component injection molding process, where a softer synthetic material component is used for the supporting element 18 and the guide elements 25 than for the body of the fastening element 10.

The fastening element 10 described is designed for fastening to a weld pin, which is already welded to a supporting part. The design described makes the fastening element 10 suitable for weld pins of unlike nominal diameters, for example 5 mm and 6 mm.

Figure 3 shows the situation of fastening the fastening element 10 to a pin 1 of small diameter provided with an external thread. Here, the catches 24 engage all the way to the core diameter in the interspaces between the thread and thus reliably hold the fastening element 10 slipped on the pin 1. The truncated inner edges of the guide elements 24 rest on the individual turns of the thread and thus produce guidance and centering of the fastening element 10 on the pin 1, so that the fastening element 10 is securely supported on the pin 1 against shaking and wobbling.

Figure 4 shows the situation of fastening to a pin 1 with a greater nominal diameter. Here, the catches 24 are effective to the same extent, but have a somewhat steeper starting angle, since because of the greater core diameter of the thicker pin 2 they are unable to spring back completely into their normal position. Since the interspace between the guide elements 25 is not great enough to accommodate the outside diameter of the thread, the turns of the thread of the pin 2 dig into the soft rubber-elastic material of the guide elements 25, so that the guide elements 25 also rest on the core diameter of the pin 2 between the threads. Here, digging in of the thread is promoted by the triangular cross sectional shape of the guide elements 25, since the resistance to deformation in the region of the inner edge of the guide elements 25 remains small as a result. The fastening element 10, with the aid of the guide elements 25 on the thicker pin 2, is prevented from tipping or rocking to an even greater extent. In addition, digging of the thread into the guide elements 25 produces an increase in holding force against loosening.

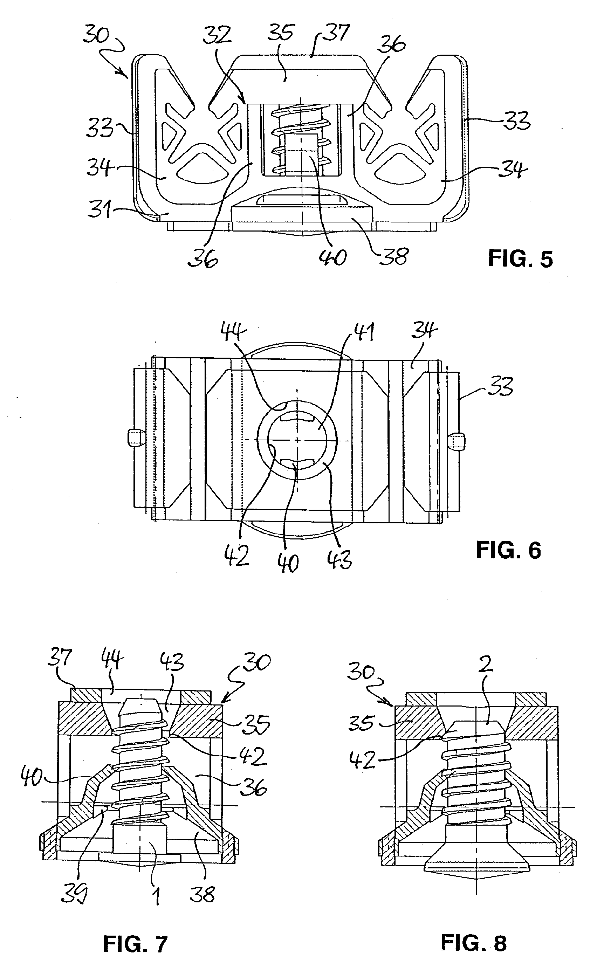

Figures 5 to 8 show a fastening element 30 with a body 31 that may be made of a hard synthetic material component, which forms a fastening section 32 and U-shaped holding regions 33. The holding regions 33 contain linings 34 of a softer rubber-elastic synthetic material. The linings 34 have a greater width than the body 31 and on the outer side of the body 31 are connected integral with a plate-like guide element 35, which is found in a recess of the fastening section 32 in the vicinity of its upper side. The fastening section 32 formed by the body 31 has substantially the shape of an open frame with parallel walls 36, the outer side of which limits the holding regions 33. On the upper side of the fastening element 30 the walls 36 are connected with a flat plate 37, which has angled edges projecting into the holding regions 33. The edges form lead-in slopes for the introduction of objects to be held in the holding regions 33 and serve for holding the objects. Adjoining the lower end of the walls 36 is a flat conical lead-in section 38 with a central hole 39. Formed on the edge of the hole 39 are two catches 40 lying opposite each other. The catches 40 are in each instance located in the center between the walls 36 and project upward into the interspace between the walls 36. The free ends of the catches 40 are in approximately the center between the lead-in section 38 and the guide element 35. The guide element 35 has a central hole 41 with a cylindrical section 42 and a conical section 43, which widens upward. Adjoining the hole 41 is a hole 44 in the plate 37. The inside diameter of the hole 44 corresponds to the greatest inside diameter of the cylindrical section 42. The cylindrical hole section 42 has an inside diameter that is equal to the outside diameter of the smallest pin 1 for which the fastening element 30 is designed.

If the fastening element 30 is connected with the pin 1, the pin 1 is supported by its thread on the cylindrical hole section 42, as shown in Figure 7. If, instead, the fastening element 30 is pressed onto the thicker pin 2, the cylindrical hole section 42 is widened and deformed by the thread of the pin 2, so that good support on the pin 2 is also obtained in this way, as shown in Figure 8. In both cases, the catches 40 engage in the interspace between the turns of the thread and thus hold the fastening element 30 securely on the respective pin.

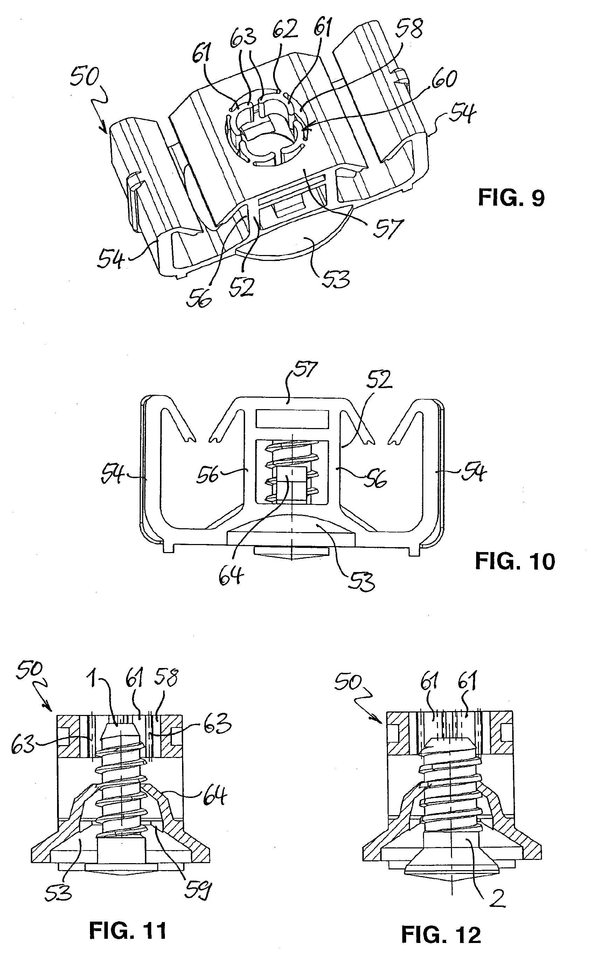

A fastening element 50, which may be made of a single hard synthetic material, is shown in Figures 9 to 12. The fastening element 50 has a central fastening section 51 with a holding section 52 and a lead-in section 53. U-shaped holding regions 54 for the accommodation of objects to be held are formed in symmetrical arrangement on opposing outer sides of the fastening section 51. The fastening section 51 has substantially the shape of a frame open on the longitudinal sides of the fastening element 50 with two parallel walls 56, which connect the tapered lead-in section 53 with a guide section 57 forming the upper side of the fastening section 51. The guide section 57 has a central cylindrical hole 58, which is aligned coaxially with a central hole 59 of the lead-in section 53. Four elastically deformable guide elements 60 are located in the cylindrical hole 58. Each guide element 60 has a cylindrical wall section 61, which is located at a distance from the wall 56 of the hole 58 and is connected by a central crosspiece 62 extending in the direction of the cylinder axes with the wall 56 of the hole 58. The wall sections 61 each have a curvature such that their distance from the wall 56 of the hole 58 increases with the distance from the respective crosspiece 62. The free ends 63 of the wall sections 61 therefore have a smaller distance from the central axis of the hole 58 than the respective center of the wall sections 61, so that they can be bent radially outward by a pin engaging in the free space between the wall sections 61.

As in the case of the fastening element 30, in the fastening element 50, at the lead-in section 53 are located catches 64 which, opposite each other, project into the interspace between the walls 56 and are able to hold pins of unlike size.

Figure 11 shows the arrangement of the fastening element 50 on a thinner pin 1. Here the thread of the pin 1 rests on the free ends 63 of the wall sections 61, where the wall sections 61 substantially retain their starting shape and are not bent open. Since in each instance both free ends 63 of a wall section 61 come into contact with the pin 1, on the whole a sufficiently firm support for guidance of the fastening element 50 secure against tipping is produced.

If, as shown in Figure 12, a thicker pin 2 is pressed into the fastening element 50, the wall sections 61 are pressed radially outward by the latter at their free ends, owing to which the necessary free space for accommodation of the pin 2 is obtained. Due to the deformation resistance of the wall sections 61 to be overcome when the pin 2 is pressed in, an even firmer support is produced. In addition, only a small play remains between the outer contour of the thicker pin 2 and the center of the wall sections 61, so that the fastening element 50 can also be supported by the crosspieces 62 on the thicker pin 2 without noteworthy movement.

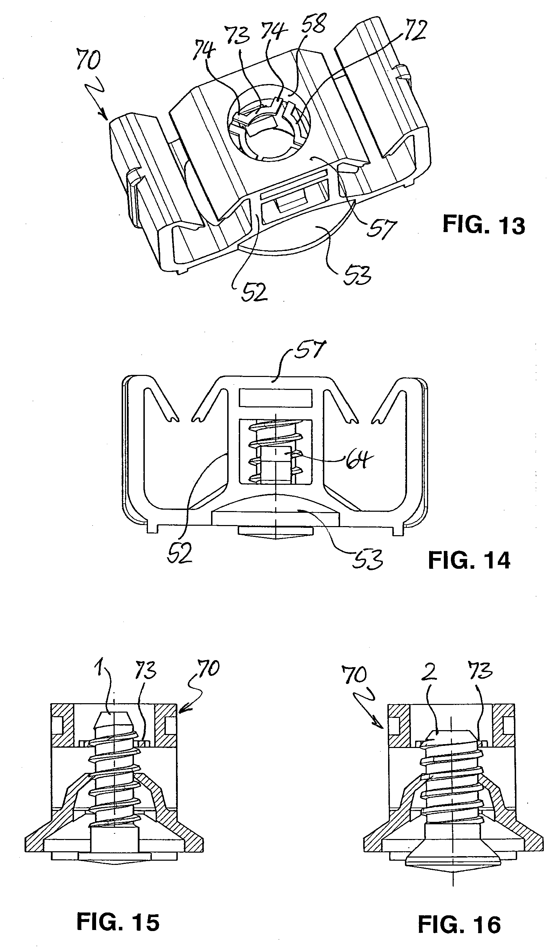

In Figures 13 to 16 is shown a fastening element 70, which differs from the fastening element 50 only by the design of the guide elements 72. Therefore, reference is made to the description of the fastening element 50 for all other parts of the fastening element 70 corresponding to the fastening element 50. In the fastening element 70, four guide elements 72 are located in the hole 58 of the guide section 57, each of which has a curved wall section 73, which is fastened at either peripheral end by a radial crosspiece 74 to the wall of the hole 58 in each instance. The wall sections 73 have a constant distance from the wall of the hole 58. They limit an inside diameter that corresponds to the outside diameter of the smallest pin for which the fastening element 70 is designed. The wall sections 73 and the crosspieces 74 have a square cross section and their thickness is dimensioned so that they are able to engage in the interspace between the turns of a thread.

If the fastening element 70, as shown in Figure 15, is connected with a thin pin 1, the wall sections 73 rest from outside on the thread of the pin 1 and thus support the fastening element 70 in the radial direction on the pin 1. If a thicker pin 2 engages in the fastening element 70, the guide elements 70 are deformed in the axial and radial directions, where the wall sections 73 engage at least partially in the threaded interspace and are supported directly on the pin core, as shown in Figure 16. In this way, the fastening element 70 is also held secure against tipping on the thick pin 2.

## Claims

1. Fastening element (10) for fastening a structural part to a pin, having a body that has a hole (12) extending along a central axis for accommodation of the pin and having an insert opening, wherein at least one catch (24) and at least one guide are located in the hole (12) and are designed to engage with the pin, **characterized in that** the at least one guide has an elastically yielding guide element (25, 35, 60, 72), which consists of a rubber-elastic synthetic material and is deformable in the radial direction with reference to the central axis, and **in that** a supporting element (18) of rubber-elastic synthetic material is located on the side of the body on which the insert opening of the hole (12) lies and the guide element (25) is molded in one piece together with the supporting element (18).

2. Fastening element (10) according to Claim 1, **characterized in that** the guide element (25) has the shape of a rib that extends in the axial direction along the hole (12).

3. Fastening element (10) according to Claim 2, **characterized in that** the cross section of the rib decreases in the direction towards the central axis of the hole (12).

4. Fastening element (10) according to any of the preceding claims, **characterized in that** the guide element (25) and the catch (24) are located opposite each other in the hole (12).

5. Fastening element (10) according to any of the preceding claims, **characterized in that** the hole (12) has a cylindrical holding section (21) and a lead-in section (22) widened conically toward the insert opening, the guide element (25) and the catch (24) being located in the holding section (21).

6. Fastening element (10) according to any of the preceding claims, **characterized in that** the supporting element (18) is located in a groove (17) of the body and has projections (19) projecting from the groove (17).

7. Fastening element (10) according to any of the preceding claims, **characterized in that** the body has a U-shaped holding region (13) that on its inner side is coated with a lining (15) of rubber-elastic synthetic material and **in that** the guide element (25) is molded in one piece together with the lining (15).

8. Fastening element (10) according to any of the preceding claims, **characterized in that** it is molded in the two-component injection molding process, where the guide element (25) consists of a soft and the body consists of a hard synthetic material component.

9. Fastening element (10) according to any of the preceding claims, **characterized in that** the catch (24) is located in the vicinity of the insert opening of the hole (12) and **in that** the guide element (25), viewed from the insert opening, is located behind the catch (24) at a distance from the catch (24).

10. Fastening element (10) according to any of the preceding claims, **characterized in that** the guide element (35) forms an annular section of the hole (39, 44).

11. Fastening element (10) according to any of the preceding claims, **characterized in that** the guide element (60, 72) has a wall section (61, 73) extending in the peripheral direction, which is located at a distance from the inner wall of the hole (58) and is connected by at least one radial crosspiece (62, 74) with the inner wall and which has a region yielding elastically in the radial direction.

12. Fastening element (10) according to claim 11, **characterized in that** the wall section (61) extends over a sector of the hole (58) that is smaller than 180°, wherein the crosspiece (62) is located in the center between the peripheral ends (63) of the wall section and the peripheral ends (63) have a distance from the central axis of the hole (58) that is smaller than the greatest distance of the wall section (61) from the central axis of the hole (58).

13. Fastening element (10) according to claim 12, **characterized in that** the peripheral ends of the wall section (73) are connected by crosspieces (74) with the inner wall of the hole (58) and the wall section (73) between the peripheral ends has a distance from the central axis of the hole (58) that is equal to or smaller than the distance of the peripheral ends from the central axis of the hole (58).

## Patentansprüche

1. Befestigungselement (10) zum Befestigen eines Bauteils an einem Bolzen mit einem Körper, der ein sich längs einer Mittelachse erstreckendes Loch (12) zur Aufnahme des Bolzens aufweist, wobei in dem Loch (12) wenigstens eine Sperrklinke (24) und wenigstens eine Führung angeordnet und dazu ausgebildet sind, um mit dem Bolzen in Eingriff zu treten, **dadurch gekennzeichnet, dass** die wenigstens eine Führung ein federnd nachgiebiges Führungselement (25, 35, 60, 72) aufweist, das aus einem gummielastischen Kunststoff besteht und in radialer Richtung in Bezug auf die Achse verformbar ist, und dass ein Abstützelement (18) aus gummielastischem Kunststoff auf der Seite des Körpers, auf der die Einstecköffnung des Loch (12) es liegt, angeordnet ist und das Führungselement (25) zusammen mit dem Abstützelement (18) in einem Stück urgeformt ist.

2. Befestigungselement (10) nach Anspruch 1, **dadurch gekennzeichnet, dass** das Führungselement (25) die Form einer Rippe hat, die sich in axialer Richtung längs des Loches (12) erstreckt.

3. Befestigungselement (10) nach Anspruch 2, **dadurch gekennzeichnet, dass** der Querschnitt der Rippe in Richtung auf die Mittelachse des Loches (12) abnimmt.

4. Befestigungselement (10) nach einem der vorhergehenden Ansprüche, **dadurch gekennzeichnet, dass** das Führungselement (25) und die Sperrklinke (24) in dem Loch (12) einander gegenüberliegend angeordnet sind.

5. Befestigungselement (10) nach einem der vorhergehenden Ansprüche, **dadurch gekennzeichnet, dass** das Loch (12) einen zylindrischen Halteabschnitt (21) und einen zur Einstecköffnung hin kegelig erweiterten Einführabschnitt (22) aufweist, wobei das Führungselement (25) und die Sperrklinke (24) in dem Halteabschnitt (21) angeordnet sind.

6. Befestigungselement (10) nach einem der vorhergehenden Ansprüche, **dadurch gekennzeichnet, dass** das Abstützelement (18) in einer Nut (17) des Körpers angeordnet ist und aus der Nut (17) herausragende Vorsprünge (19) aufweist.

7. Befestigungselement (10) nach einem der vorhergehenden Ansprüche, **dadurch gekennzeichnet, dass** der Körper einen U-törmigen Haltebereich (13) aufweist, der auf seiner Innenseite mit einem Futter (15) aus gummielastischem Kunststoff ausgekleidet ist und dass das Führungselement (25) in einem Stück zusammen mit dem Futter (15) urgeformt ist.

8. Befestigungselement (10) nach einem der vorhergehenden Ansprüche, **dadurch gekennzeichnet, dass** es im Zweikomponenten-Spritzgießverfahren urgeformt ist, wobei das Führungselement (25) aus einer weichen und der Körper aus einer harten Kunststoffkomponente besteht.

9. Befestigungselement (10) nach einem der vorhergehenden Ansprüche, **dadurch gekennzeichnet, dass** die Sperrklinke (24) in der Nähe der Einstecköffnung des Loches (12) angeordnet ist und dass das Führungselement (25) von der Einstecköffnung aus gesehen hinter der Sperrklinke (24) in einem Abstand von der Sperrklinke (24) angeordnet ist.

10. Befestigungselement (10) nach einem der vorhergehenden Ansprüche, **dadurch gekennzeichnet, dass** das Führungselement (35) einen ringförmigen Abschnitt des Loches (39, 44) bildet.

11. Befestigungselement (10) nach einem der vorhergehenden Ansprüche, **dadurch gekennzeichnet, dass** das Führungselement (60, 72) einen sich in Umfangsrichtung erstreckenden Wandabschnitt (61, 72) aufweist, der in einem Abstand von der Innenwand des Loches (58) angeordnet und durch wenigstens einen radialen Quersteg (62, 74) mit der Innenwand verbunden ist und der einen in radialer Richtung federnd nachgiebigen Bereich hat.

12. Befestigungselement (10) nach Anspruch 11, **dadurch gekennzeichnet, dass** sich der Wandabschnitt (61) über einen Sektor des Loches (58) erstreckt, der kleiner ist als 180°, wobei der Quersteg (62) in der Mitte zwischen den Umfangsenden (63) des Wandabschnitts angeordnet ist und die Umfangsenden (63) einen Abstand von der Mittelachse des Loches (58) haben, der kleiner ist als der größte Abstand des Wandabschnitts (61) von der Mittelachse des Loches (58).

13. Befestigungselement (10) nach Anspruch 12, **dadurch gekennzeichnet, dass** die Umfangsenden des Wandabschnitts (73) durch Querstege (74) mit der Innenwand des Loches (58) verbunden sind und der Wandabschnitt (73) zwischen den Umfangsenden einen Abstand von der Mittelachse des Loches (58) hat, der gleich oder kleiner ist als der Abstand der Umfangsenden von der Mittelachse des Loches (58).

## Revendications

1. Élément de fixation (10) destiné à fixer une partie de structure à un goujon, qui présente un corps qui présente un trou (12) qui s'étend le long d'un axe central destiné à recevoir le goujon et qui présente une ouverture d'insertion, dans lequel un dispositif de retenue (24) au moins et un guide au moins, se situent dans le trou (12) et sont conçus de façon à venir en prise avec le goujon, **caractérisé en ce que** le ou les guides présentent un élément de guidage flexible de manière élastique (25, 35, 60, 72), qui est réalisé dans un matériau synthétique de caoutchouc élastique et qui peut se déformer dans la direction radiale par rapport à l'axe central, et **en ce qu'**un élément de support (18) réalisé dans un matériau synthétique de caoutchouc élastique se situe sur le côté du corps sur lequel se situe l'ouverture d'insertion du trou (12) et l'élément de guidage (25) est moulé d'une seule pièce avec l'élément de support (18).

2. Élément de fixation (10) selon la revendication 1, **caractérisé en ce que** l'élément de guidage (25) présente la forme d'une nervure qui s'étend dans la direction axiale le long du trou (12).

3. Élément de fixation (10) selon la revendication 2, **caractérisé en ce que** la section transversale de la nervure diminue dans la direction vers l'axe central du trou (12).

4. Élément de fixation (10) selon l'une quelconque des revendications précédentes, **caractérisé en ce que** l'élément de guidage (25) et le dispositif de retenue (24) se situent à l'opposé l'un de l'autre dans le trou (12).

5. Élément de fixation (10) selon l'une quelconque des revendications précédentes, **caractérisé en ce que** le trou (12) présente une section retenue cylindrique (21) et une section entrée (22) élargie de manière conique vers l'ouverture d'insertion, l'élément de guidage (25) et le dispositif de retenue (24) se situant dans la section retenue (21).

6. Élément de fixation (10) selon l'une quelconque des revendications précédentes, **caractérisé en ce que** l'élément de support (18) se situe dans une rainure (17) du corps et présente des saillies (19) qui font saillie à partir de la rainure (17).

7. Élément de fixation (10) selon l'une quelconque des revendications précédentes, **caractérisé en ce que** le corps présente une région de retenue en forme de U (13) qui est revêtue, sur son côté intérieur, d'un revêtement (15) réalisé dans un matériau synthétique de caoutchouc élastique, et **en ce que** l'élément de guidage (25) est moulé d'une seule pièce avec le revêtement (15).

8. Élément de fixation (10) selon l'une quelconque des revendications précédentes, **caractérisé en ce qu'**il est moulé au cours d'un processus de moulage par injection à deux composants, où l'élément de guidage (25) se compose d'un élément mou et le corps se compose d'un composant réalisé dans un matériau synthétique dur.

9. Élément de fixation (10) selon l'une quelconque des revendications précédentes, **caractérisé en ce que** le dispositif de retenue (24) se situe à proximité de l'ouverture d'insertion du trou (12), et **en ce que** l'élément de guidage (25), quand on le regarde à partir de l'ouverture d'insertion, se situe derrière le dispositif de retenue (24) à une distance à partir du dispositif de retenue (24).

10. Élément de fixation (10) selon l'une quelconque des revendications précédentes, **caractérisé en ce que** l'élément de guidage (35) forme une section annulaire du trou (39, 44).

11. Élément de fixation (10) selon l'une quelconque des revendications précédentes, **caractérisé en ce que** l'élément de guidage (60, 72) présente une section paroi (61, 73) qui s'étend dans la direction périphérique, qui se situe à une distance à partir de la paroi intérieure du trou (58), et qui est connectée à la paroi intérieure par une pièce transversale radiale (62, 74) au moins, et qui présente une région flexible de manière élastique dans la direction radiale.

12. Élément de fixation (10) selon la revendication 11, **caractérisé en ce que** la section paroi (61) s'étend au-dessus d'un secteur du trou (58) qui est inférieur à 180°, dans lequel la pièce transversale (62) se situe au centre entre les extrémités périphériques (63) de la section paroi, et les extrémités périphériques (63) présentent une distance à partir de l'axe central du trou (58) qui est inférieure à la distance la plus grande de la section paroi (61) à partir de l'axe central du trou (58).

13. Élément de fixation (10) selon la revendication 12, **caractérisé en ce que** les extrémités périphériques de la section paroi (73) sont connectées par des pièces transversales (74) à la paroi intérieure du trou (58), et la section paroi (73) entre les extrémités périphériques présente une distance à partir de l'axe central du trou (aux 58) qui est égale ou inférieure à la distance des extrémités de périphérique à partir de l'axe central du trou (58).
